# DEMANDE DE BREVET EUROPEEN

(11) **EP 3 037 349 A1**
(43) Date de publication de la demande: **29.06.2016**
(21) Numéro de dépôt: 15198255.0
(22) Date de dépôt: 07.12.2015
(51) Int. Cl.: B64C 25/54, B64C 39/02

(54) **DRONE À VOILURE TOURNANTE POURVU D'UN ACCESSOIRE POUR LE RENDRE AMPHIBIE**

(30) Priorité: 22.12.2014 FR 1463075
(71) Demandeur: Parrot, 75010 Paris (FR)
(72) Inventeur: FARGEAU, Karim, 94220 CHARENTON LE PONT (FR); BENATAR, Yoni, 92260 LES LILAS (FR); LAVAGEN, Gauthier, 75010 PARIS (FR)
(74) Mandataire: Dupuis-Latour, Dominique

(57) **Abrégé**

Le drone (10) comprend un corps (12) et une pluralité de blocs propulseurs munis chacun d'une hélice (18) entrainée par un moteur individuel, les différents moteurs étant commandables de manière différenciée pour piloter le drone en attitude et en vitesse et avec production d'une force ascensionnelle. L'accessoire comprend un arbre (20) assujetti de manière amovible sur le corps du drone dans une orientation transversale (X) par rapport à la direction principale de progression du drone, et en un point (22) situé au droit du centre de gravité du drone et au-dessus de ce centre de gravité. L'accessoire comprend deux éléments toriques (26) montés librement à rotation indépendamment l'un de l'autre aux extrémités de l'arbre (20) et symétriquement par rapport au corps du drone (12). La densité par rapport à l'eau de ces éléments toriques (26) est inférieure à l'unité et leur diamètre est supérieur aux dimensions hors-tout du drone.

## Description

L'invention concerne les drones de loisir, notamment les drones à voilure tournante tels que les quadricoptères et analogues.

Ces drones comprennent un corps de drone et une pluralité de blocs propulseurs montés à l'extrémité de bras de liaison, chaque bloc propulseur étant muni d'une hélice entrainée par un moteur individuel. Les différents moteurs sont commandables de manière différenciée pour piloter le drone en attitude et en vitesse.

Un tel exemple est le *Rolling Spider* commercialisé par Parrot SA, Paris, France.

Ce drone peut en particulier être muni d'un accessoire constitué par un arbre pourvu à chacune de ses extrémités d'une roue de grand diamètre. L'arbre est orienté transversalement par rapport à la direction principale d'évolution du drone et les roues ont un diamètre supérieur à la dimension hors-tout maximale du drone avec ses hélices. Cette configuration permet en particulier de faire non seulement voler le drone mais également, muni de ses roues, de faire rouler ce drone au sol, le long d'un mur, contre un plafond, etc., en multipliant ainsi les possibilités d'évolution, en plus des habituelles configurations de vol libre et de sustentation du drone.

Le US 2014/131507 A1 décrit également un drone d'un type comparable, entouré d'une cage externe librement mobile en rotation, qui permet au drone de rouler au sol ou contre un mur.

Le but de l'invention est de proposer un accessoire permettant à un tel drone d'évoluer non seulement en vol libre et sur le sol ou contre une paroi, mais également sur un plan d'eau.

Il s'agit en d'autres termes, avec un unique accessoire, de rendre le drone totalement amphibie par ses propres moyens, avec des capacités d'évolution multiples "air-terre-mer" au seul gré des commandes envoyées par l'utilisateur.

Une structure flottante légère telle qu'un voilier peut être rendu amphibie en lui adjoignant quatre roues lui permettant d'évoluer aussi sur terre, comme cela est décrit par le WO 2004/094226 A2. Les roues peuvent être des roues faisant aussi fonction de flotteurs, pour augmenter la portance de la structure.

Pour rendre amphibie un aéronef conventionnel (comme dans le cas des hydravions ou de certains hélicoptères), la structure volante est munie de flotteurs, et éventuellement d'une coque adaptée, lui permettant de se poser sur un plan d'eau et d'évoluer sur celui-ci en particulier lors des phases de décollage et d'amerrissage. L'inconvénient des flotteurs est toutefois leur trainée importante, qui freine très fortement l'aéronef.

Ce phénomène n'est pas gênant lors de phases d'amerrissage/décollage, car au décollage l'accélération de l'aéronef produit un déjaugeage rapide réduisant la trainée, et lors de l'amerrissage la résistance opposée par les flotteurs facilite le ralentissement jusqu'à l'arrêt.

En revanche, s'il s'agit seulement d'évoluer sur le plan d'eau hors de phases d'amerrissage/décollage, la réaction hydrodynamique des flotteurs à l'avancement est un inconvénient réel.

Il en est de même lorsque l'on souhaite effectuer des manoeuvres rapides telles que des demi-tours ou autres changements d'orientation, qui ne peuvent pas être réalisés sur place mais nécessitent un espace libre autour de l'aéronef, pour permettre à ce dernier d'effectuer un virage tout en continuant à flotter.

Le but de l'invention est de résoudre les problèmes ci-dessus, en proposant un accessoire permettant au drone d'évoluer indifféremment au sol ou contre une paroi, sur un plan d'eau ou bien en l'air sans changement d'accessoire, avec des facultés d'évolution sur l'eau comparables à celles rencontrées sur un sol ferme, à savoir :
- faible résistance à l'avancement ;
- changements de direction immédiats et sans virage, avec typiquement des rotations d'un quart de tour ou d'un demi-tour sur place ;
- caractère autostable de l'ensemble à l'arrêt, c'est-à-dire qu'une propulsion n'est pas nécessaire pour assurer la flottaison et la bonne orientation du drone.

L'invention propose à cet effet un drone à voilure tournante comprenant de manière en elle-même connue (par exemple sous la forme de l'appareil *Rolling Spider* cité et décrit plus haut) : un corps de drone ; une pluralité de blocs propulseurs montés à l'extrémité de bras de liaison, chaque bloc propulseur étant muni d'une hélice entrainée par un moteur individuel et les différents moteurs étant commandables de manière différenciée pour piloter le drone en attitude et en vitesse et avec production d'une force ascensionnelle ; et un accessoire de drone, comprenant un arbre apte à être assujetti de manière amovible sur le corps du drone dans une orientation transversale par rapport à la direction principale de progression du drone, et en un point situé au droit du centre de gravité du drone et au-dessus de ce centre de gravité.

De façon caractéristique, l'accessoire comprend deux éléments toriques montés librement à rotation indépendamment l'un de l'autre aux extrémités respectives de l'arbre et symétriquement par rapport au corps du drone, et la densité par rapport à l'eau de ces éléments toriques est inférieure à l'unité, et leur diamètre est supérieur aux dimensions hors-tout du drone.

Dans une forme de réalisation avantageuse, chaque élément torique est un élément plein, réalisé en une matière plastique expansée, par exemple une matière surmoulée sur une roue à rayons apte à être montée à rotation sur l'arbre.

On va maintenant décrire un exemple de mise en oeuvre de l'invention, en référence aux dessins annexés où les mêmes références désignent, d'une figure à l'autre, des éléments identiques ou fonctionnellement semblables.

La Figure 1 est une vue d'ensemble, en perspective, d'un drone muni d'un accessoire selon l'invention lui permettant d'évoluer indifféremment au sol, sur l'eau et dans l'air.

La Figure 2 est une coupe par un plan vertical axial de la pièce mobile de l'accessoire, montée à l'extrémité de l'arbre sur lequel elle tourne.

Les Figures 3(a) et (b) sont des vues de face du drone de la Figure 1 dans une configuration où celui-ci se trouve au-dessus d'un plan d'eau, respectivement au repos avec les propulseurs arrêtés, et avec propulsion pour lui permettre d'avancer sur le plan d'eau.

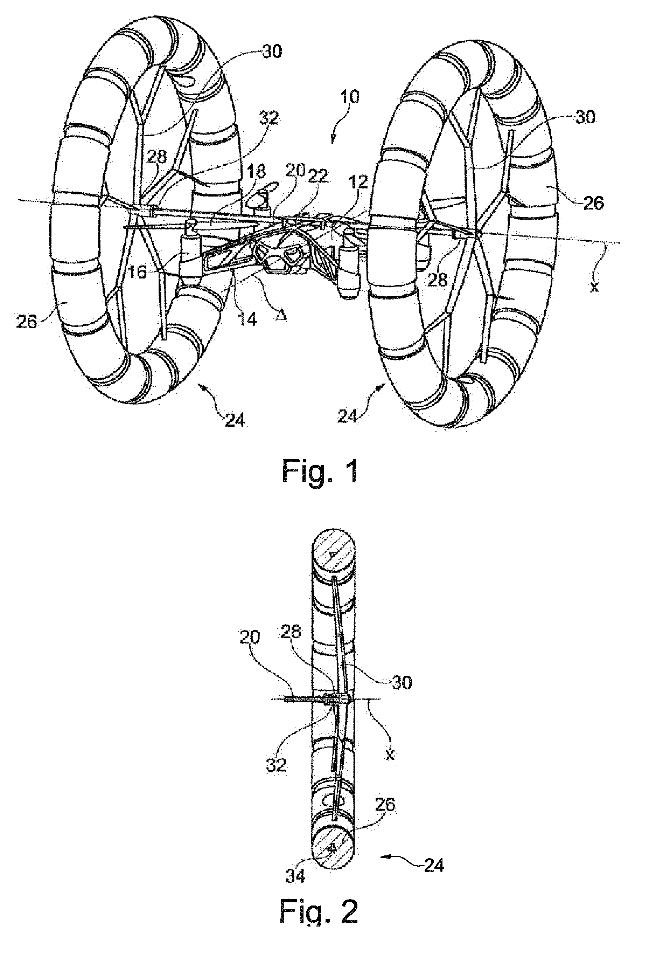

Sur la Figure 1, on a représenté un ensemble comprenant un drone 10 de type quadricoptère, par exemple de type *Rolling Spider* commercialisé par Parrot SA, Paris, France, avec un corps central 12 à partir duquel rayonnent quatre bras supports 14. Chaque bras support 14 est équipé à son extrémité distale d'un bloc propulseur 16 comprenant un moteur entrainant en rotation une hélice 18 s'étendant dans un plan horizontal au-dessus du bras support 14.

Le drone est muni d'un accessoire porté par un arbre transversal 20 s'étendant suivant un axe X perpendiculaire à la direction principale Δ de progression du drone. L'arbre 20 est monté sur le corps du drone 12 au moyen d'une pièce de liaison 22 permettant de détacher aisément l'accessoire du drone, ou inversement de monter l'accessoire sur le drone par un système de fixation rapide et de verrouillage, tel que par exemple celui décrit dans la demande FR 14 56589 du 08.07.2014 pour *"Système de fixation rapide d'un accessoire sur le corps d'un drone".*

L'arbre 20 est monté sur le corps de drone 12 de manière à être solidaire de celui-ci en translation et en rotation, c'est-à-dire que l'arbre 20 ne peut pas se déplacer axialement, ni tourner sur lui-même.

L'arbre porte à chacune de ses extrémités une pièce mobile 24, les deux pièces mobiles 24 étant montées symétriquement par rapport au drone, de part et d'autre du corps du drone 12 et des blocs propulseurs 16 et des hélices 18. Les pièces mobiles 24 s'étendent dans des plans parallèles entre eux et perpendiculaires à l'axe X de l'arbre 20, et leur diamètre extérieur est supérieur à la dimension hors-tout du drone avec ses hélices. Les pièces mobiles 24 portent à leur périphérie un élément torique 26 relié à un moyeu 28 par l'intermédiaire de bras rayonnants 30. Ces pièces mobiles 24 sont montées librement à rotation aux extrémités 32 de l'arbre 20, chacune des deux pièces 24 pouvant tourner indépendamment de l'autre et étant de ce fait purement passive.

D'autre part, la densité par rapport à l'eau de l'élément torique 26 est inférieure à l'unité. Avantageusement, comme illustré Figure 2, l'élément torique 26 est un élément plein, réalisé en une matière plastique expansée telle que le PPE surmoulée sur une roue circulaire 34 solidaire des bras rayonnants 30.

Les pièces mobiles 24, qui n'ont pas de rôle d'entrainement, jouent un triple rôle :
- dans une configuration de vol où le drone évolue dans l'air, elles protègent le drone, et notamment ses hélices, contre les chocs ;
- dans une configuration de roulage au sol ou contre une paroi, elles permettent au drone de rester en contact avec le sol ou la paroi mais à distance, le drone (mû par la seule force de ses hélices) pouvant alors rouler sur ce sol ou cette paroi ;
- dans une configuration d'évolution sur un plan d'eau, elles font fonction de flotteurs et permettent la progression avec le minimum de résistance du drone à la surface du plan d'eau, de façon caractéristique de l'invention et comme on va l'expliquer ci-après.

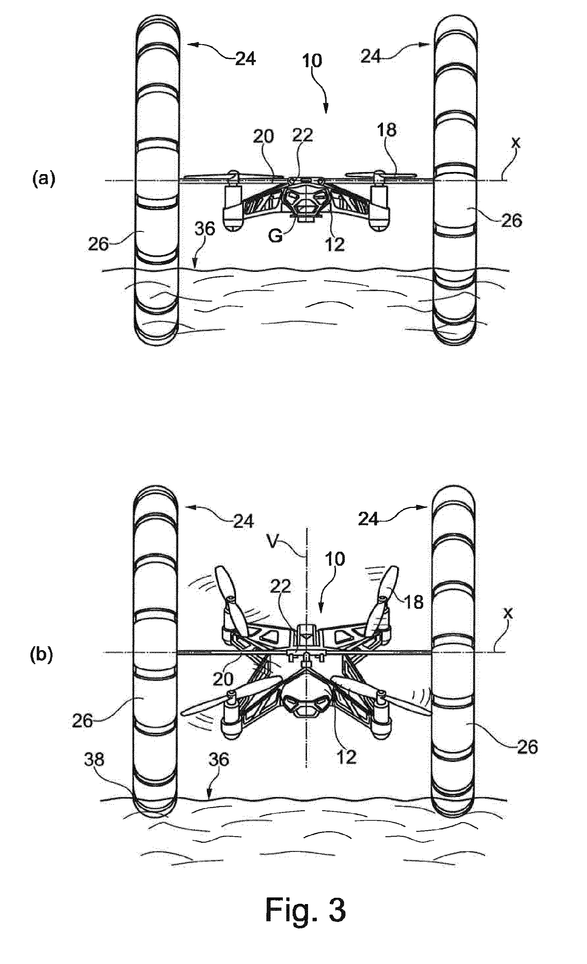

Les Figures 3(a) et (b) sont des vues de face du drone équipé de son accessoire dans une configuration où celui-ci se trouve au-dessus d'un plan d'eau, respectivement au repos avec les propulseurs arrêtés (Figure 3(a)), et avec propulsion pour lui permettre d'avancer sur le plan d'eau (Figure 3(b)).

En l'absence de propulsion, c'est-à-dire avec les hélices 18 arrêtées (configuration illustrée Figure 3(a)) les pièces 24 jouent un simple rôle de flotteurs, permettant de soutenir le drone au-dessus du niveau du plan d'eau 36.

On notera que l'arbre 20 est avantageusement monté sur le dos du drone de manière que le centre de gravité G de ce dernier se situe au-dessous de l'axe X de l'arbre 20, ce qui rend le système autostable et permet un retour naturel à l'équilibre, drone horizontal, quelles que soient les conditions initiales.

On peut ainsi "jeter à l'eau" le drone muni de son accessoire sans précaution particulière, et l'ensemble se retrouvera toujours dans la position illustrée Figure 3a - ce qui ne serait pas le cas avec de simples flotteurs de type "hydravion" montés sur le drone, ce dernier pouvant tomber sur le plan d'eau sur le côté ou sur le dos sans possibilité de revenir à la position d'équilibre normal.

Lorsque les propulseurs sont activés (configuration illustrée Figure 3(b)), le drone, mû par la seule force de ses hélices peut évoluer sur le plan d'eau 34. Les pièces mobiles 24, qui n'ont qu'un rôle passif, assurent en premier lieu la flottaison de l'ensemble sur le plan d'eau 36 grâce aux éléments toriques 26, avec une faible résistance à l'avancement (beaucoup plus faible que celle de flotteurs conventionnels), du fait de l'entrainement en rotation des pièces mobiles 24.

On notera que la portance est alors essentiellement celle de l'air, du fait de la force ascensionnelle des propulseurs du drone qui provoque un déjaugeage des éléments toriques 26, avec un abaissement important de la ligne de flottaison 38 qui réduit d'autant la résistance à l'avancement sur le plan d'eau.

Par ailleurs, on a sur le plan d'eau toutes les évolutions possibles qu'on avait au sol, notamment la possibilité d'effectuer sur place un demi-tour ou quart de tour (rotation du drone autour d'un axe vertical V) par commande différentielle des hélices droite et gauche, les deux pièces mobiles 24 tournant alors en sens inverse pendant cette rotation sur place. L'accessoire selon l'invention rend ainsi le drone totalement amphibie, avec des possibilités d'évolution aussi bien dans l'air, en vol libre, ou indifféremment au sol, contre une paroi ou sur l'eau, ceci sans changement d'accessoire.

On notera par ailleurs que les commandes de pilotage pour une évolution du drone en roulage au sol sont tout à fait compatibles avec un pilotage du drone sur un plan d'eau, et ne nécessitent pas de modification spécifique du logiciel de commande du drone, ni de l'interface utilisateur.

## Revendications

1. Un drone (10) à voilure tournante, comprenant :
- un corps de drone (12) ;
- une pluralité de blocs propulseurs (16) montés à l'extrémité de bras de liaison (14), chaque bloc propulseur étant muni d'une hélice (18) entrainée par un moteur individuel et les différents moteurs étant commandables de manière différenciée pour piloter le drone en attitude et en vitesse et avec production d'une force ascensionnelle ; et
- un accessoire de drone, comprenant un arbre (20) apte à être assujetti de manière amovible sur le corps du drone dans une orientation transversale (X) par rapport à la direction principale (Δ) de progression du drone, et en un point (22) situé au droit du centre de gravité (G) du drone et au-dessus de ce centre de gravité,
**caractérisé en ce que** l'accessoire comprend deux éléments toriques (26) montés librement à rotation indépendamment l'un de l'autre aux extrémités respectives (32) de l'arbre (20) et symétriquement par rapport au corps du drone (12),
et **en ce que** la densité par rapport à l'eau de ces éléments toriques (26) est inférieure à l'unité, et leur diamètre est supérieur aux dimensions hors-tout du drone.

2. Le drone de la revendication 1, dans lequel chaque élément torique est un élément plein, réalisé en une matière plastique expansée.

3. Le drone de la revendication 2, dans lequel la matière plastique expansée est une matière surmoulée sur une roue (34) à rayons apte à être montée à rotation sur l'arbre.
